# EUROPÄISCHE PATENTANMELDUNG

(11) **EP 3 964 905 A1**
(43) Veröffentlichungstag der Anmeldung: **09.03.2022**
(21) Anmeldenummer: 20194643.1
(22) Anmeldetag: 04.09.2020
(51) Int. Cl.: G05B 19/418, G05B 19/042

(54) **NUTZERSPEZIFISCHE ABHÄNGIGKEITEN ZWISCHEN DIGITALEN REPRÄSENTATIONEN VON PROZESSOBJEKTEN**

(71) Anmelder: Siemens Aktiengesellschaft, 80333 München (DE)
(72) Erfinder: Lutz, Benjamin, 76327 Pfinztal (DE)

(57) **Zusammenfassung**

Vorgeschlagen wird ein Leitsystem (1) für eine Prozessanlage, das wenigstens einen Operator Station Server (2) und einen Operator Station Client (3) aufweist, wobei auf dem Operator Station Server (2) digitale Repräsentationen von Prozessobjekten der Prozessanlage implementiert sind, und wobei der Operator Station Server (2) dazu ausgebildet ist, Informationen an den Operator Station Client (3) zu übermitteln, um eine grafische Darbietung (9, 10, 11, 12, 13, 14, 15, 16, 17, 18, 19) der digitalen Repräsentationen an einen Operator der Prozessanlage durch den Operator Station Client (3) zu ermöglichen. Das Leitsystem (1) ist dadurch gekennzeichnet, dass der Operator Station Server (2) dazu ausgebildet ist, auf eine entsprechende Anforderung durch den Operator hin zur Laufzeit der Prozessanlage eine nutzerspezifische Verbindung zwischen wenigstens zwei der digitalen Repräsentationen zu erzeugen und diese in dem Leitsystem (1), vorzugsweise auf dem Operator Station Server (2), zu hinterlegen.

## Beschreibung

Die Erfindung betrifft ein Leitsystem für eine Prozessanlage mit den Oberbegriffsmerkmalen des Anspruchs 1. Außerdem betrifft die Erfindung ein Verfahren und ein Computerprogramm mit Programmcodemitteln.

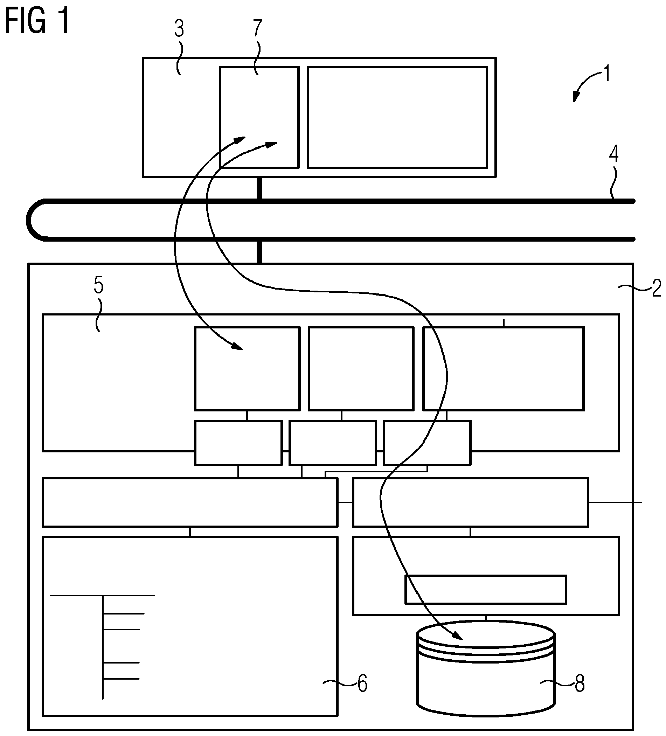

Für die Bedienung und Beobachtung verfahrenstechnischer Anlagen werden symbolische Anlagenbilder erstellt, die die verfahrenstechnischen Zusammenhänge - insbesondere zwischen den Prozessobjekten - abstrahiert darstellen. Weiterhin können verfahrenstechnische Zusammenhänge zwischen Prozessobjekten auch über die so genannten "Faceplate Jumps" im Engineering projektiert werden. Diese Relationen sind jedoch gerichtet, so dass der Operator damit entlang eines verfahrenstechnischen Strangs nach "links" oder "rechts" navigieren kann - wie in Abbildung 1 dargestellt. Ausgehend von einem geöffneten Faceplates eines Prozessobjekts, können die Faceplates benachbarter Prozessobjekte geöffnet werden.

"Faceplate Jumps" wurden unter anderem zur Verbesserung des Alarmmanagements eingeführt (Alarmabhängigkeiten zwischen Prozessobjekten), oder um abhängige Bedienungen effizienter zu gestalten (erst Ventil öffnen, dann Pumpe anschalten...). Durch die feste Projektierung der "Faceplate Jumps" sind die Abhängigkeiten durch das Engineering fest vorgegeben und zumeist auf einen spezifischen Anwendungsfall optimiert (z.B. Bedienung und Beobachtung). Auch die Reduktion auf "Faceplate Jumps" zwischen in Abhängigkeit stehenden Prozessobjekte schränkt deren Nutzen zu sehr ein.

In der DE 10 2015 215 828 A1 ist ein Leitsystem offenbart, welches ein zur einer Prozessanlage gehöriges Anlagenbild visuell darstellen kann, wobei das Anlagenbild mehrere digitale Repräsentationen von Prozessobjekten visuell darstellen kann.

Die Prozessobjekte sowie die digitalen Repräsentationen können dabei in Verbindung stehen.

Der Erfindung liegt die Aufgabe zugrunde, ein Leitsystem für eine technische Anlage anzugeben, das für den jeweiligen Anwendungsfall situationsbedingt konfigurierbar ist.

Diese Aufgabe wird gelöst durch ein Leitsystem für eine Prozessanlage, das wenigstens einen Operator Station Server und einen Operator Station Client aufweist, wobei auf dem Operator Station Server digitale Repräsentationen von Prozessobjekten der Prozessanlage implementiert sind, und wobei der Operator Station Server dazu ausgebildet ist, Informationen an den Operator Station Client zu übermitteln, um eine visuelle Darbietung der digitalen Repräsentationen an einen Operator der Prozessanlage durch den Operator Station Client zu ermöglichen. Das Leitsystem ist dadurch gekennzeichnet, dass der Operator Station Server dazu ausgebildet ist, auf eine entsprechende Anforderung durch den Operator hin zur Laufzeit der Prozessanlage eine nutzerspezifische Verbindung zwischen wenigstens zwei der digitalen Repräsentationen zu erzeugen und diese in dem Leitsystem, vorzugsweise auf dem Operator Station Server, zu hinterlegen.

Unter einem Leitsystem wird im vorliegenden Kontext ein computergestütztes technisches System verstanden, das Funktionalitäten zum Darstellen, Bedienen und Leiten einer Prozessanlage umfasst. Das Leitsystem umfasst im vorliegenden Fall wenigstens eine erste Anlagenkomponente und eine zweite Anlagenkomponente. Zudem kann das Leitsystem sogenannte prozessnahe Komponenten umfassen, die zur Ansteuerung von Aktoren bzw. Sensoren dienen.

Bei der Prozessanlage handelt es sich um eine Anlage aus der Prozessindustrie wie beispielsweise eine chemische, pharmazeutische, petrochemische oder eine Anlage aus der Nahrungs- und Genussmittelindustrie.

Unter einem "Operator Station Server" wird vorliegend ein Server verstanden, der zentral Daten eines Bedien- und Beobachtungssystems sowie in der Regel Alarm- und Messwertarchive des Leitsystems der Prozessanlage erfasst und Benutzern (sogenannten "Operatoren") zur Verfügung stellt. Der Operator Station Server stellt in der Regel eine Kommunikationsverbindung zu Automatisierungssystemen (wie einem Automatisierungsgerät) der Prozessanlage her und gibt Daten der Prozessanlage an sogenannte Operator Station Clients weiter, die zur Bedienung und Beobachtung eines Betriebs der einzelnen Funktionselemente der technischen Anlage dienen.

Bei den Prozessobjekten kann es sich um einzelne Messumformer für Sensoren oder Steuergeräte für Aktoren der technischen Anlage handeln. Ein Prozessobjekt kann aber auch ein Zusammenschluss mehrerer solcher Messumformer oder Steuergeräte sein, beispielsweise ein Motor, ein Reaktor, eine Pumpe oder ein Ventilsystem. Übergeordnete Geräte wie ein Automatisierungsgerät oder eine dezentrale Periphere sind ebenfalls unter dem Begriff "Prozessobjekt" zu fassen. Ein Automatisierungsgerät ist dabei ein technisches Gerät, das zur Realisierung einer Automatisierung benutzt wird. Es kann sich dabei beispielsweise um eine speicherprogrammierbare Steuerung handeln, die eine übergeordnete Steuerungsfunktion für untergeordnete Steuerungen darstellt.

Der Operator Station Server kann über Client-Funktionen verfügen, um auf die Daten (Archive, Meldungen, Tags, Variablen) anderer Operator Station Server zuzugreifen. Dadurch sind Bilder eines Betriebs der technischen Anlage auf dem Operator Station Server mit Variablen anderer Operator Station Server (Server-Server-Kommunikation) kombinierbar. Bei dem Operator Station Server kann es sich, ohne sich darauf zu beschränken, um einen SIMATIC PCS 7 Industrial Workstation Server der Firma SIEMENS handeln.

Die digitale Repräsentation kann als ein digitaler Zwilling eines dazugehörigen Prozessobjektes verstanden werden. Der Operator Station Server ist in an sich bekannter Weise dazu ausgebildet, Informationen bezüglich der digitalen Repräsentation an den Operator Station Client weiterzuleiten, damit dieser die digitale Repräsentation einem Operator des Leitsystems grafisch darbietet. Mit anderen Worten wird dem Operator ein das Prozessobjekt grafisch repräsentierendes Objekt durch den Operator Station Client beispielsweise auf einem Bildschirm eines Computers oder eines Smartphones grafisch dargeboten.

Erfindungsgemäß ist das Leitsystem bzw. der Operator Station Server derart ausgebildet, dass der Operator eine oder mehrere nutzerspezifische, d.h. individualisierte Verbindungen zwischen wenigstens zwei digitalen Repräsentationen erzeugen und in dem Leitsystem hinterlegen kann. Bei einer derartigen Verbindung handelt sich beispielsweise um eine Sprunganweisung. Wählt der Operator (z.B. durch ein "Anklicken") die Sprunganweisung der mit dieser Sprunganweisung versehenen grafischen Darbietung einer ersten digitalen Repräsentation eines Prozessobjektes aus, so wird ihm unmittelbar eine zweite digitale Repräsentation eines Prozessobjektes grafisch dargeboten. Hierdurch lässt sich eine Effizienz der Bedienung und Beobachtung des Leitsystems erhöhen.

Zur Erstellung der Verbindung kann der Operator beispielsweise auf einen Prozessobjekt-Browser oder auf eine technologische Hierarchie des Leitsystem zurückgreifen, in denen alle Prozessobjekte des Leitsystems gelistet sind und gesucht werden können.

Die erzeugte Verbindung wird in dem Leitsystems hinterlegt, so dass der Operator bei einer nachfolgenden Bedienung und Beobachtung des Leitsystems einfach darauf zurückkommen kann, ohne den Aufwand der Individualisierung erneut betreiben zu müssen.

Im Gegensatz zum Stand der Technik können Verbindungen zwischen einzelnen digitalen Repräsentationen zur Laufzeit der Prozessanlage erstellt und gespeichert werden. Die Speicherung kann vorteilhafterweise auf dem Operator Station Server erfolgen, um dem Operator die individuelle Konfiguration unabhängig von dem Operator Station Client, den er nutzt, zugänglich zu machen. Eine Speicherung in einer cloudbasierten Umgebung, ggf. sogar außerhalb der Prozessanlage, ist aber ebenfalls möglich. Bevorzugt können die in dem Leitsystem hinterlegten nutzerspezifischen Verbindungen von dem Operator bei einer späteren Nutzung des Leitsystems abgerufen und genutzt werden.

Bislang mussten die Verbindungen in einer Projektierungsphase der Prozessanlage erstellt werden. Nach einem Laden der Projektierung auf eine Automatisierung der Prozessanlage konnten die Verbindungen nicht individuell von dem Operator erstellt bzw. verändert werden. Hieraus erwächst aus der vorliegenden Erfindung ein deutlicher Vorteil gegenüber den bislang bekannten Leitsystemen für Prozessanlagen.

Der Operator Station Client ist vorteilhafterweise dazu ausgebildet, die von der nutzerspezifischen Verbindung betroffenen digitalen Repräsentationen dem Operator zur gleichen Zeit gemeinsam grafisch darzubieten. Der Operator kann dabei nicht nur eine der beiden miteinander in Relation stehenden digitalen Repräsentation sehen, sondern beide gleichzeitig (z.B. nebeneinander). Hierdurch kann die Übersichtlichkeit für den Operator gesteigert werden.

Bei einer bevorzugten Weiterbildung der Erfindung ist der Operator Station Server dazu ausgebildet, den von der nutzerspezifischen Verbindung betroffenen digitalen Repräsentationen jeweils ein grafisches Referenzsymbol zuzuordnen und dem Operator durch den Operator Station Client grafisch darzubieten, wobei das grafische Referenzsymbol auf wenigstens ein anderes der von der nutzerspezifischen Verbindung betroffenen digitalen Repräsentationen referenziert, derart, dass eine Anwahl des Referenzsymbols durch den Operator eine grafische Darbietung der jeweils referenzierten anderen digitalen Repräsentation durch den Operator Station Client bewirkt. Ein grafisches Referenzsymbol kann beispielsweise ein "Pfeil" sein.

Das Leitsystem kann dazu ausgebildet sein, die von der nutzerspezifischen Verbindung betroffenen digitalen Repräsentationen dem Operator in Form eines verfahrenstechnischen Strangs zur gleichen Zeit gemeinsam grafisch darzubieten. Dies kann die Übersichtlichkeit beim Bedienen und Beobachten weiter erhöhen und (komplexe) verfahrenstechnische Zusammenhänge schneller ersichtlich machen.

Die zuvor formulierte Aufgabe wird außerdem gelöst durch ein Verfahren, das die folgenden Verfahrensschritte umfasst:
a) Auf eine entsprechende Anforderung durch einen Operator einer Prozessanlage hin, Erzeugen einer nutzerspezifischen Verbindung zwischen wenigstens zwei digitalen Repräsentationen von Prozessobjekten der Prozessanlage zur Laufzeit der Prozessanlage, wobei die Anforderung über einen Operator Station Client an einen Operator Station Server eines Leitsystems der Prozessanlage erfolgt;
b) Hinterlegen der zuvor erzeugten nutzerspezifischen Verbindung in dem Leitsystem, vorzugsweise auf dem Operator Station Server.

Bevorzugt bietet der Operator Station Client die von der nutzerspezifischen Verbindung betroffenen digitalen Repräsentationen dem Operator zur gleichen Zeit gemeinsam grafisch dar.

Besonders bevorzugt ordnet der Operator Station Server den von der nutzerspezifischen Verbindung betroffenen digitalen Repräsentationen jeweils ein grafisches Referenzsymbol zu und bietet dem Operator das Referenzsymbol durch den Operator Station Client grafisch dar, wobei das grafische Referenzsymbol auf wenigstens ein anderes der von der nutzerspezifischen Verbindung betroffenen digitalen Repräsentationen referenziert, derart, dass eine Anwahl des Referenzsymbols durch den Operator eine grafische Darbietung der jeweils referenzierten anderen digitalen Repräsentation durch den Operator Station Client bewirkt.

Im Rahmen einer Weiterbildung des Verfahrens werden die in dem Leitsystem hinterlegten nutzerspezifischen Verbindungen von dem Operator bei einer späteren Nutzung des Leitsystems abgerufen und genutzt.

Der Operator Station Client kann die von der nutzerspezifischen Verbindung betroffenen digitalen Repräsentationen dem Operator in Form eines verfahrenstechnischen Strangs zur gleichen Zeit gemeinsam grafisch darbieten.

Zudem wird die Aufgabe gelöst durch ein Computerprogramm mit Programmcodemitteln zu Durchführung eines zuvor erläuterten Verfahrens.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Es zeigen:
- FIG 1: ein erfindungsgemäßes Leitsystem einer Prozessanlage;
- FIG 2: eine erste grafische Darstellung von Prozessobjekten;
- FIG 3: eine zweite grafische Darstellung von Prozessobjekten; und
- FIG 4: eine dritte grafische Darstellung von Prozessobjekten.

In FIG 1 ist ein erfindungsgemäßes Leitsystem 1 einer als Prozessanlage, d.h. verfahrenstechnische Anlage, ausgebildeten technischen Anlage dargestellt. Das Leitsystem 1 umfasst einen Operator Station Server 2 und einen Operator Station Client 3. Der Operator Station Server 2 und der Operator Station Client 3 sind über einen Terminalbus 4 miteinander und optional mit nicht dargestellten weiteren Komponenten des Leitsystems 1 wie einem Engineering Station Server verbunden.

Ein Benutzer bzw. Operator kann zum Zwecke des Bedienens und Beobachtens über den Operator Station Client 3 mittels des Terminalbus 4 auf den Operator Station Server 3 zugreifen. Der Terminalbus 4 kann, ohne sich darauf zu beschränken, beispielsweise als Industrial Ethernet ausgebildet sein.

Der Operator Station Server 2 umfasst einen Visualisierungsdienst 5, der unter anderem dazu ausgebildet ist, Visualisierungsanweisungen an den Operator Station Client 3 zu übertragen, um eine digitale Repräsentation eines (nicht dargestellten) Prozessobjektes der Prozessanlage durch den Operator Station Client 3 einem Operator des Leitsystems 1 grafisch darbieten zu lassen. Die digitale Repräsentation des Prozessobjektes umfasst aktuelle Prozesswerte, Alarme, Status etc. des Prozessobjektes, die in einem Prozessabbild 6 des Operator Station Servers 2 hinterlegt sind.

Der Operator kann zu einer Laufzeit der Prozessanlage auf einen Individualisierungsdienst 7 zugreifen, welcher es ihm ermöglicht, Verbindungen zwischen den grafischen Darbietungen einzelner digitaler Repräsentationen von Prozessobjekten zu erstellen. Diese Verbindungen beziehen sich dabei gleichfalls auf die einzelnen digitalen Repräsentationen und können in einer Datenbank 8 des Leitsystems 1 nutzerspezifisch hinterlegt werden.

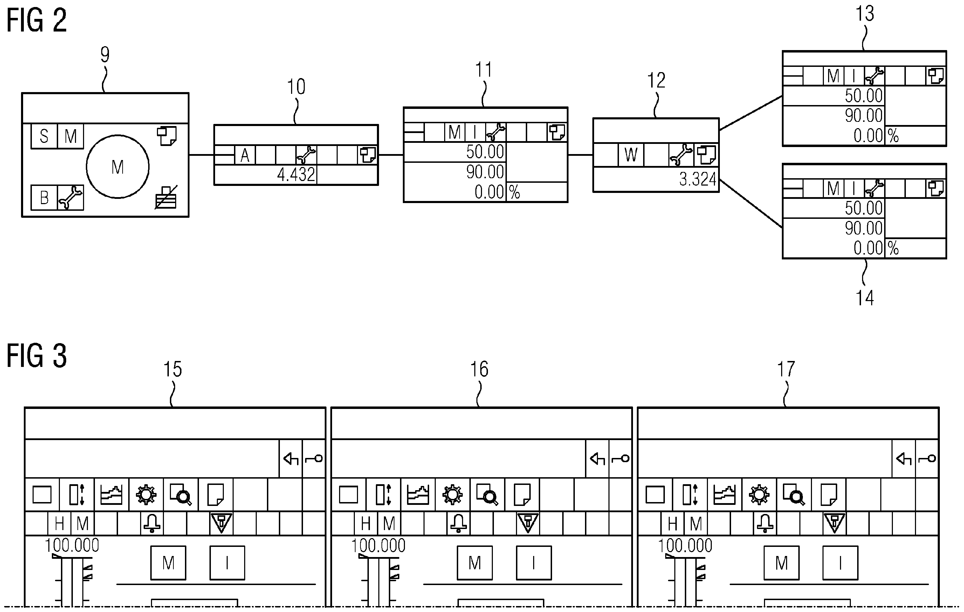

Der Operator kann beispielsweise die in FIG 2 veranschaulichte Darstellungsform wählen. Hierbei werden die von der erzeugten nutzerspezifischen Verbindung betroffenen digitalen Repräsentationen dem Operator in Form eines verfahrenstechnischen Strangs zur gleichen Zeit gemeinsam grafisch dargeboten. FIG 2 zeigt hierzu eine erste grafische Darbietung 9 einer ersten digitalen Repräsentation, eine zweite grafische Darbietung 10 einer zweiten digitalen Repräsentation, eine dritte grafische Darbietung 11 einer dritten digitalen Repräsentation, eine vierte grafische Darbietung 12 einer vierten digitalen Repräsentation, eine fünfte grafische Darbietung 13 einer fünften digitalen Repräsentation und eine sechste grafische Darbietung 14 einer sechsten digitalen Repräsentation. Die grafischen Darbietungen 9, 10, 11, 12, 13, 14 sind entlang eines verfahrenstechnischen Strangs angeordnet und vermitteln dem Operator einen raschen Überblick, wo er gegebenenfalls eingreifen muss.

FIG 3 zeigt drei weitere grafische Darbietungen 15, 16, 17, die in beliebiger Weise nebeneinander oder übereinander oder anderweitig zur gleichen Zeit dem Operator gemeinsam dargeboten werden. Beispielsweise kann sich der Operator verschiedene Darbietungen 15, 16, 17 anzeigen lassen, die alle Stellwertänderungen ermöglichen.

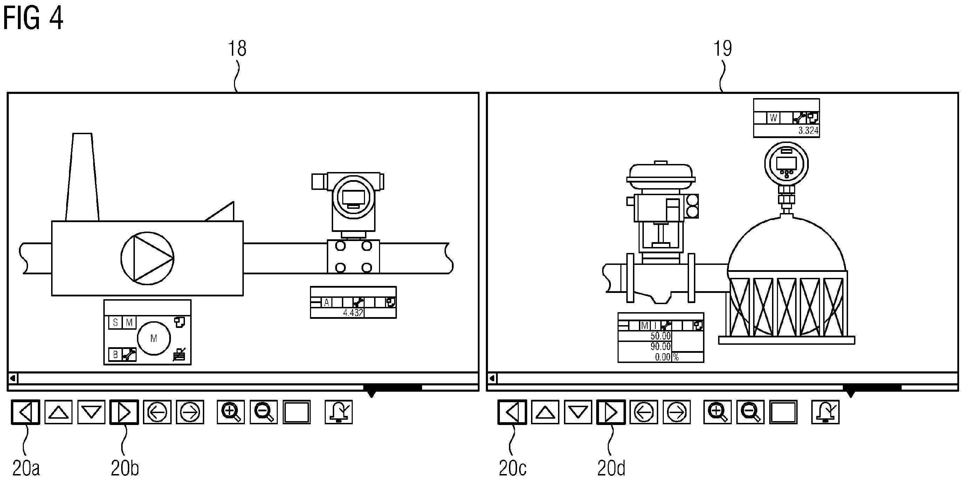

FIG 4 zeigt zwei weitere grafische Darbietungen 18, 19, die jeweils eine Gruppe von mehreren digitalen Repräsentationen von Prozessobjekten darstellen. Bei den Gruppen kann es sich dabei um sogenannte primäre Anlagenbilder handeln. Der Operator Station Server 2 ist im Fall des Beispiels in FIG 4 dazu ausgebildet, den von der nutzerspezifischen Verbindung betroffenen digitalen Repräsentationen jeweils ein grafisches Referenzsymbol 20a, 20b, 20c, 20d zuzuordnen und dem Operator durch den Operator Station Client 3 grafisch darzubieten. Dabei referenzieren die grafischen Referenzsymbole 20a, 20b, 20c, 20d auf wenigstens ein anderes der von der nutzerspezifischen Verbindung betroffenen digitalen Repräsentationen. Eine Anwahl eines der Referenzsymbole 20a, 20b, 20c, 20d durch den Operator bewirkt eine grafische Darbietung einer anderen referenzierten, digitalen Repräsentation durch den Operator Station Client 3. Mit anderen Worten kann der Operator im Beispiel von FIG 4 mittels der Pfeilsymbole zwischen den einzelnen Gruppen von mehreren digitalen Repräsentationen von Prozessobjekten umschalten, zwischen denen der Operator zuvor Verbindungen erzeugt hat. Das Beispiel ist nicht auf die Verwendung lediglich zweier Gruppen beschränkt, sondern es kann vielmehr eine beliebige Anzahl von referenzierten Gruppen bzw. grafischen Darbietungen zur Anwendung kommen.

Alle zuvor erläuterten beispielhaften Ausprägungen der Erfindung haben gemein, dass sich der Operator zur Laufzeit der Prozessanlage anwendungsspezifische und situationsbedingt optimal grafische Darbietungen, ggf. durch die Verwendung von Referenzsymbolen, zusammenstellen kann. Hierdurch können das Bedienen und Beobachten der Prozessanlage bzw. des Leitsystems deutlich erleichtert werden.

## Patentansprüche

1. Leitsystem (1) für eine Prozessanlage, das wenigstens einen Operator Station Server (2) und einen Operator Station Client (3) aufweist, wobei auf dem Operator Station Server (2) digitale Repräsentationen von Prozessobjekten der Prozessanlage implementiert sind, und wobei der Operator Station Server (2) dazu ausgebildet ist, Informationen an den Operator Station Client (3) zu übermitteln, um eine grafische Darbietung (9, 10, 11, 12, 13, 14, 15, 16, 17, 18, 19) der digitalen Repräsentationen an einen Operator der Prozessanlage durch den Operator Station Client (3) zu ermöglichen,
**dadurch gekennzeichnet, dass**
der Operator Station Server (2) dazu ausgebildet ist, auf eine entsprechende Anforderung durch den Operator hin zur Laufzeit der Prozessanlage eine nutzerspezifische Verbindung zwischen wenigstens zwei der digitalen Repräsentationen zu erzeugen und diese in dem Leitsystem (1), vorzugsweise auf dem Operator Station Server (2), zu hinterlegen.

2. Leitsystem (1) nach Anspruch 1, bei dem der Operator Station Client (3) dazu ausgebildet ist, die von der nutzerspezifischen Verbindung betroffenen digitalen Repräsentationen dem Operator zur gleichen Zeit gemeinsam grafisch darzubieten.

3. Leitsystem (1) nach Anspruch 1 oder 2, bei dem der Operator Station Server (2) dazu ausgebildet ist, den von der nutzerspezifischen Verbindung betroffenen digitalen Repräsentationen jeweils ein grafisches Referenzsymbol (20a, 20b, 20c, 20d) zuzuordnen und dem Operator durch den Operator Station Client (3) grafisch darzubieten, wobei das grafische Referenzsymbol (20a, 20b, 20c, 20d) auf wenigstens ein anderes der von der nutzerspezifischen Verbindung betroffenen digitalen Repräsentationen referenziert, derart, dass eine Anwahl des grafischen Referenzsymbols (20a, 20b, 20c, 20d) durch den Operator eine grafische Darbietung (9, 10, 11, 12, 13, 14, 15, 16, 17, 18, 19) der jeweils referenzierten anderen digitalen Repräsentation durch den Operator Station Client (3) bewirkt.

4. Leitsystem (1) nach einem der vorangegangenen Ansprüche, bei dem die in dem Leitsystem (1) hinterlegten nutzerspezifischen Verbindungen von dem Operator bei einer späteren Nutzung des Leitsystems (1) abgerufen und genutzt werden können.

5. Leitsystem (1) nach einem der vorangegangenen Ansprüche, bei dem der Operator Station Client (3) dazu ausgebildet ist, die von der nutzerspezifischen Verbindung betroffenen digitalen Repräsentationen dem Operator in Form eines verfahrenstechnischen Strangs zur gleichen Zeit gemeinsam grafisch darzubieten.

6. Verfahren, umfassend:
a) Auf eine entsprechende Anforderung durch einen Operator einer Prozessanlage hin, Erzeugen einer nutzerspezifischen Verbindung zwischen wenigstens zwei digitalen Repräsentationen von Prozessobjekten der Prozessanlage zur Laufzeit der Prozessanlage, wobei die Anforderung über einen Operator Station Client (3) an einen Operator Station Server (2) eines Leitsystems (1) der Prozessanlage erfolgt;
b) Hinterlegen der zuvor erzeugten nutzerspezifischen Verbindung in dem Leitsystem (1), vorzugsweise auf dem Operator Station Server (2).

7. Verfahren nach Anspruch 6, bei dem der Operator Station Client (3) die von der nutzerspezifischen Verbindung betroffenen digitalen Repräsentationen dem Operator zur gleichen Zeit gemeinsam grafisch darbietet.

8. Verfahren nach Anspruch 6 oder 7, bei dem der Operator Station Server den von der nutzerspezifischen Verbindung betroffenen digitalen Repräsentationen jeweils ein grafisches Referenzsymbol (20a, 20b, 20c, 20d) zuordnet und dem Operator das grafische Referenzsymbol (20a, 20b, 20c, 20d) durch den Operator Station Client (3) grafisch darbietet, wobei das grafische Referenzsymbol (20a, 20b, 20c, 20d) auf wenigstens ein anderes der von der nutzerspezifischen Verbindung betroffenen digitalen Repräsentationen referenziert, derart, dass eine Anwahl des grafischen Referenzsymbols (20a, 20b, 20c, 20d) durch den Operator eine grafische Darbietung (9, 10, 11, 12, 13, 14, 15, 16, 17, 18, 19) der jeweils referenzierten anderen digitalen Repräsentation durch den Operator Station Client (3) bewirkt.

9. Verfahren nach einem der Ansprüche 6 bis 8, bei dem die in dem Leitsystem (1) hinterlegten nutzerspezifischen Verbindungen von dem Operator bei einer späteren Nutzung des Leitsystems (1) abgerufen und genutzt werden.

10. Verfahren nach einem der Ansprüche 6 bis 9, bei dem der Operator Station Client (3) die von der nutzerspezifischen Verbindung betroffenen digitalen Repräsentationen dem Operator in Form eines verfahrenstechnischen Strangs zur gleichen Zeit gemeinsam grafisch darbietet.

11. Computerprogramm mit Programmcodemitteln zur Durchführung eines Verfahrens gemäß einem der Ansprüche 6 bis 10.
